# EUROPEAN PATENT APPLICATION

(11) **EP 4 742 313 A1**
(43) Date of publication of application: **13.05.2026**
(21) Application number: 25212391.4
(22) Date of filing: 30.10.2025
(51) Int. Cl.: H01M 4/13, H01M 50/60

(54) **ELECTRODE AND RECHARGEABLE BATTERY INCLUDING THE SAME**

(30) Priority: 06.11.2024 KR 20240156546
(71) Applicant: SAMSUNG SDI CO., LTD., Yongin-si, Gyeonggi-do 17084 (KR)
(72) Inventor: LEE, Hojung, Yongin-si 17084 (KR); KIM, Yeongap, Yongin-si 17084 (KR); HONG, Daehyun, Yongin-si 17084 (KR); MIN, Jungki, Yongin-si 17084 (KR); JI, Hyeongmin, Yongin-si 17084 (KR)
(74) Representative: Maiwald GmbH

(57) **Abstract**

An electrode for a rechargeable battery according to an example embodiment includes a substrate, an active material layer formed on the substrate, a hole formed in the active material layer, and a first groove and a second groove formed on both sides of the hole and spaced apart from the hole.

## Description

### BACKGROUND OF THE DISCLOSURE

### (a) Field of the Disclosure

The present disclosure relates to an electrode, and a rechargeable battery including the electrode.

### (b) Description of the Related Art

As technology for portable devices develops, demand for rechargeable batteries as an energy source is increasing. A rechargeable battery, unlike a primary battery, may be repeatedly charged and discharged.

Rechargeable batteries may be manufactured by overlapping a positive electrode, a separator, and a negative electrode, and then winding the positive electrode, the separator, and the negative electrode to form a cylindrical or jelly roll-shaped electrode assembly, or by separating the positive electrode, the separator, and the negative electrode into sheets and then laminating the sheets to form a laminated electrode assembly.

In the rechargeable battery, the electrode assembly is inserted into the case, and an electrolyte is then injected. An impregnation amount of the electrolyte may vary depending on the state of edges and a center of the electrode assembly or an active material layer.

A non-uniform electrolyte can lead to lithium (Li) precipitation, shortening the battery's lifespan and making rapid charging challenging.

### SUMMARY OF THE DISCLOSURE

Examples of the present disclosure provide an electrode capable of reducing electrolyte non-uniformity at an edge and center of the electrode, and a rechargeable battery including the electrode.

An electrode for a rechargeable battery according to an aspect includes a substrate, an active material layer formed on the substrate, a hole formed in the active material layer, and a first groove and a second groove formed on both sides of the hole and spaced apart from the hole.

The sum of the length of the first groove and the length of the second groove may be in a range of about 10% to about 80% of the length in a first direction of the active material layer.

An interval between the first groove and the second groove may be in a range of about 10% to about 80% of the length of the active material layer in the first direction.

The holes may have an opening facing the surface of the active material layer, may be formed in multiples, and may be arranged at regular intervals.

The holes may have a shape that narrows in width as the distance from the surface of the active material layer increases.

The depth of the first groove and the second groove may be constant.

The depth of the first groove and the second groove may be shallower than the depth of the hole.

The center of the hole and a horizontal line that bisects the width of the groove may be positioned on one straight line.

The first groove and the second groove may be inclined at an angle in a range of about -50 to about 50 degrees with respect to an imaginary or virtual center line passing between the first groove and the second groove and bisecting the length of the first direction of the active material layer.

The hole, the first groove and the second groove may be symmetrical, or substantially symmetrical, with respect to the imaginary or virtual center line passing between the first groove and the second groove and bisecting the length of the first direction of the active material layer.

The first groove and the second groove may include a curved line.

The width of the first groove and the second groove may be in a range of about 10 µm to about 100 µm, and the interval between the adjacent first grooves and the interval between the adjacent second grooves may be in a range of about 70 µm to about 300 µm.

The diameter of the hole may be in a range of about 10 µm to about 100 µm.

A rechargeable battery according to another aspect includes an electrode assembly including a positive electrode, a negative electrode overlapping the positive electrode, a separator positioned between the positive electrode and the negative electrode, a case accommodating the electrode assembly, an electrolyte injected into the case, and a cap assembly sealing the case. At least one of the positive electrode and the negative electrode includes an active material layer having a substrate, the first groove and the second groove formed on the substrate and spaced apart from each other in a direction in which the electrolyte is injected, and a hole positioned between the first groove and the second groove.

The sum of the length of the first groove and the length of the second groove may be in a range of about 10% to about 80% of the length of the active material layer in the direction in which the electrolyte is injected.

The interval between the first groove and the second groove may be in a range of about 10% to about 80% of the length of the active material layer in the direction in which the electrolyte is injected.

The holes may be formed in a plurality and may be placed at a given interval.

The first groove and the second groove may be inclined at an angle in a range of about -50 degrees to about 50 degrees with respect to the imaginary or virtual center line that passes between the first groove and the second groove and that bisects the length of the active material layer in the direction in which the electrolyte is injected.

The hole, the first groove and the second groove may be symmetrical, or substantially symmetrical, with respect to the imaginary or virtual center line that passes between the first groove and the second groove and that bisects the length of the active material layer in the direction in which the electrolyte is injected.

The first groove and the second groove may include curved lines.

As described in the present disclosure, when the groove and the hole are formed, the electrolyte moves and stays not only at the edge but also at the center within a short time, so that the electrolyte impregnation at the edge and the center becomes uniform. Therefore, by reducing or preventing lithium from being precipitated due to uneven distribution of the electrolytes, the lifespan of a rechargeable battery may be increased.

### BRIEF DESCRIPTION OF THE DRAWINGS

The following drawings attached to the present specification illustrate example embodiments of the present disclosure, and further describe aspects and features of the present disclosure together with the detailed description of the present disclosure, and thus the present disclosure should not be construed as being limited to the drawings.
FIG. 1 is a top plan view of an electrode included in a rechargeable battery according to an example embodiment.
FIG. 2 is a cross-sectional view taken along a line II-II' of FIG. 1.
FIG. 3 to FIG. 6 are top plan views of an electrode according to another example embodiment.
FIG. 7 is a top plan view of an electrode included in a rechargeable battery according to another example embodiment.
FIG. 8 is a schematic perspective view of a rechargeable battery according to an example embodiment.
FIG. 9 is a longitudinal cross-sectional view of the rechargeable battery illustrated in FIG. 8.
FIG. 10 is a cross-sectional view of the rechargeable battery illustrated in FIG. 8.

### DETAILED DESCRIPTION OF THE EMBODIMENTS

Hereinafter, example embodiments of the present disclosure are described in detail, with reference to the accompanying drawings. The terms or words used in the present specification and claims are not to be construed as general or dictionary meanings, but rather as meanings and concepts that are consistent with the technical idea of the present disclosure on the basis of the principle that an inventor may define concepts of terms to describe his/her disclosure in a desired way. The example embodiments described in this specification and the configurations illustrated in the drawings are only some of the example embodiments of the present disclosure, and do not represent all of the technical aspects and features of the present disclosure, so it should be understood that various equivalents and modifications may replace or modify the example embodiments described herein at the time of filing this application.

It should be further understood that when used in this specification, the terms "includes," "including," "comprises," and/or "comprising" indicate the presence of stated features, integers, steps, operations, elements, and/or components but do not preclude the presence or addition of one or more other features, numbers, steps, operations, elements, components, and/or groups thereof.

In the figures, dimensions of the various elements, layers, and the like, may be exaggerated for clarity of illustration. Like reference numerals in different embodiments may designate like elements.

Although "first," "second" and the like, are used to describe various configurations, the components are not limited by these terms. These terms are only used to distinguish one component from another, and unless otherwise stated, a first component may also be a second component.

Throughout the specification, unless otherwise stated, each element may be singular or plural.

Spatially relative terms such as "beneath," "below," "lower," "above," "upper," and the like may be used herein for ease of description to describe one element or feature's relationship to one or more other element(s) or feature(s) as illustrated in the figures. It should be understood that such spatially relative terms are intended to encompass different orientations of the device in use or operation in addition to the orientations depicted in the figures. For example, when the device in the figures is turned over, elements described as "below" or "beneath" other elements or features would then be oriented "above" or "over" the other elements or features. Thus, the term "below" may encompass an orientation of both above and below.

It should be understood that when an element or layer is referred to as being "on," "connected to," or "coupled to" another element or layer, the element may be "directly on," connected, or coupled to the other element or layer, or one or more intervening elements or layers may also be present.

The terminology used in this specification is intended to describe example embodiments of the present disclosure and is not intended to limit the present disclosure.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

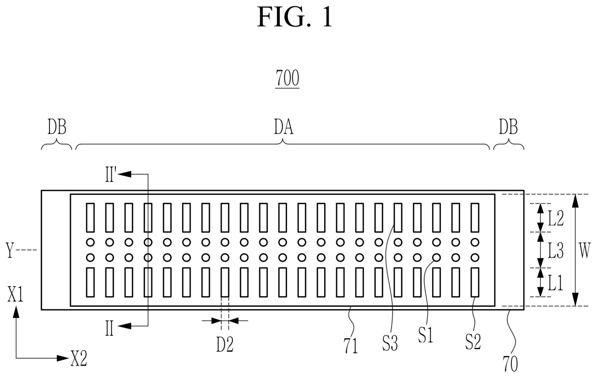

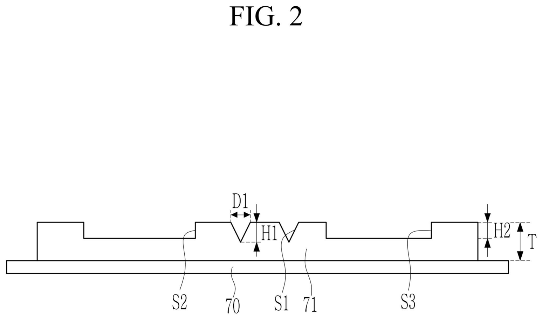

FIG. 1 is a top plan view of an electrode included in a rechargeable battery according to an example embodiment. FIG. 2 is a cross-sectional view taken along a line II-II' of FIG. 1.

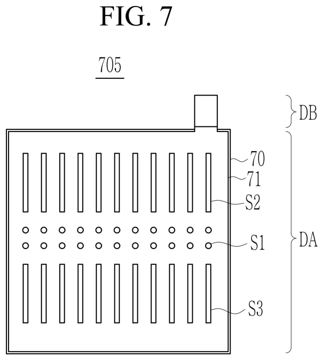

As shown in FIG. 1 and FIG. 2, an electrode 700 according to an example embodiment includes a substrate 70 and an active material layer 71 formed on one surface of the substrate 70. For better understanding and ease of description, the active material layer is shown as formed on one surface, but the active material layer may be formed on both surfaces of the substrate. The electrode 700 is described as an electrode included in a wound-type electrode assembly of a rechargeable battery described below, but is not limited thereto and may also be used as an electrode of a stacked-type electrode assembly (referring to FIG. 7).

The substrate 70 may include an electrode coated region DA and an electrode uncoated region DB, and the active material layer 71 may be formed in the electrode coated region DA. In the electrode uncoated region DB, the substrate is exposed because the active material layer 71 is not formed, and an electrode tab may be attached to draw current to the outside of the electrode 700.

The electrode uncoated region DB may be positioned at both ends of the substrate in a length direction X2 as shown in FIG. 1, but is not limited thereto, and may be formed elongated in the length direction X2 of the substrate like the active material layer 71. The length direction X2 may be the wound direction when forming a wound-type electrode assembly.

Holes S1 and grooves S2 and S3 may be formed in the active material layer 71.

The holes S1 may have a substantially circular or polygonal plane shape, and may be spaced at substantially regular intervals. The hole S1 may have a conical or polygonal shape as it narrows in width away from the surface of the active material layer 71 and becomes closer to the substrate 70.

The grooves S2 and S3 include a first groove S2 and a second groove S3, which are positioned on either side of the hole S1. The hole S1 and the grooves S2 and S3 may be arranged symmetrically or substantially symmetrically with respect to an imaginary or virtual center line Y that bisects the length of the active material layer 71 in one direction X1. One direction of the active material layer 71 may be a width direction thereof.

A diameter D1 of the hole and a width D2 of the grooves S2 or S3 may be larger than a particle diameter (or a diameter) of the active material particle, and a depth H1 of the holes S1 and a depth H2 of the grooves S2 and S3 may be larger than the diameter D1 and the width D2. As the depth of the holes S1 increases, the impregnation characteristic improves, so the cross-section of the hole S1 and the grooves S2 and S3 in the thickness direction of the active material layer 71 may have a narrow and long shape. By forming the depth of the hole S1 or the depth of the grooves S2 and S3 deep in this way, the active material particles exposed to the inside of the hole S1 or the grooves S2 and S3 increase, so the contact area between the active material particles and the electrolyte increases, thereby improving the charging and discharging performance of the rechargeable battery.

For example, the diameter D1 of the hole S1 may be in a range of about 10 µm to about 100 µm, the width D2 of the grooves S2 and S3 may be in a range of about 10 µm to about 100 µm, and the depths H1 and H2 of the hole S1 and the grooves S2 and S3 may be in a range of about 10 µm to about 100 µm. For example, the diameter of the polygonal hole S1 is the length of the longest diagonal.

The holes S1 and the grooves S2/S3 may be formed in a plurality and may be arranged at regular intervals along the length direction X2 of the substrate, and the interval between the adjacent holes or an interval D3 between the grooves may be in a range of about 70 µm to about 300 µm. For example, the interval D3 between the grooves may be larger than the width D2 of the grooves.

The sum of a length L1 of the first groove S2 and a length L2 of the second groove S3 may be in a range of about 10% to about 80% of a width W of the active material layer 71. The width W of the active material layer 71 may be the length in the first direction X1 along which the electrolyte is injected when injecting the electrolyte in the rechargeable battery, as described below.

The depth H1 of the hole S1 and the grooves S2 and S3 may be less than about 50% of the thickness T of the active material layer 71, and the depth H1 of the hole S1 may be greater than the depth H2 of the grooves S2 and S3.

The hole S1 may be formed in a plurality, and may be arranged at a given interval in one direction. FIG. 1 shows two holes S1 between the first groove S2 and the second groove S3, but the number of holes S1 is not limited thereto, and more holes S1 may be formed. An interval L3 between the first groove and the second groove where the hole is formed may be in a range of about 10% to about 80% of the width W of the active material layer.

The length L1 of the first groove, the length L2 of the second groove, and the interval L3 between the grooves may vary depending on the distance over which the electrolyte is transferred, depending on the width W of the active material layer 71. For example, as the width W is smaller, the length L1 of the first groove and the length L2 of the second groove may be shorter than the interval L3 between the grooves S2/S3. Conversely, as the width W increases, the length L1 of the first groove and the length L2 of the second groove become larger than the interval L3 between the grooves S2/S3, whereby the electrolyte may be readily transferred to the hole positioned at the center.

In one example embodiment, the hole S1 is placed between the grooves S2/S3 so as to be relatively centered on the electrode, and the grooves are formed elongated in the direction X1 through which the electrolyte is injected so that the electrolyte moves smoothly when the electrolyte is injected.

The hole is relatively centered so that a certain amount of the electrolyte that has moved through the groove may remain within the hole, thereby increasing the amount of the electrolyte positioned at the center of the electrode.

The active material layer may be partially non-uniform in density and thickness, and the like, depending on the process, which may cause partial differences in the impregnation amount and the speed when injecting the electrolyte; however, in an example embodiment, by forming the holes S1 and the grooves S2/S3 at regular intervals throughout the active material layer, the electrolyte may be injected at a constant speed and amount throughout the active material layer when an electrolyte is injected.

In this way, in an example embodiment, by forming the hole S1 and the groove S2/S3, the movement and the impregnation amount of the electrolyte may be increased, and the electrolyte may be impregnated uniformly, or substantially uniformly, throughout the electrode. Therefore, phenomena such as lithium precipitation due to electrolyte non-uniformity may be reduced.

Depending on the depth of the hole, an impregnation time was measured and shown in Table 1 below.

**Table 1:**

| | Comparative Example 1 | Comparative Example 2 | Embodiment 1 | Embodiment 2 | Embodiment 3 |
|---|---|---|---|---|---|
| Hole depth (µm) | X | 5 | 20 | 35 | 50 |
| Impregnation time (s) | 164 | 161 | 142 | 125 | 110 |

Comparative Examples 1 and 2, and Embodiments 1, 2, and 3 formed an active material layer with the same active material, and produced a negative electrode including graphite. In Comparative Example 1, no hole was formed, and in Comparative Example 2, and Embodiments 1, 2, and 3, the hole diameter was the same, and only the depth of the hole was formed differently.

While Comparative Examples 1 and 2 have long impregnation times of over 160 seconds, the impregnation times decrease as they go from Embodiment 1 to Embodiment 3, reaching 110 seconds, which is over 30% faster than Comparative Example 1.

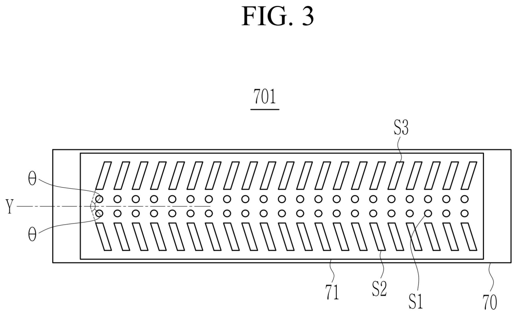

FIG. 3 to FIG. 5 are top plan views of an electrode according to another example embodiment.

Electrodes 701, 702, 703, and 704 of FIG. 3 to FIG. 6 are substantially identical to the electrodes of FIG. 1, so only the different parts are described in detail.

As shown in FIG. 3 to FIG. 5, the first groove S2 and the second groove S3 may be formed in various shapes to facilitate the movement of the electrolytes. As shown in FIG. 3 to FIG. 5, when a groove is formed, the length of the grooves S2 and S3 increases so that the time for the electrolyte to reach the central hole may be increased, but the area of the active material layer moving along the grooves S2 and S3 may be increased, thereby allowing the electrolyte to diffuse evenly throughout the active material layer.

Therefore, depending on the impregnation speed and amount of the electrolyte, the holes and the size and plane shape thereof may be formed.

Referring to an electrode 701 of FIG. 3, the first groove S2 and the second groove S3 may be tilted at a given angle (θ) with respect to the imaginary or virtual center line Y. At this time, the angle (θ) may be in a range of about -50 degrees to about 50 degrees.

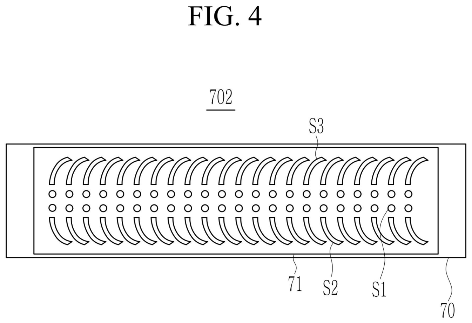

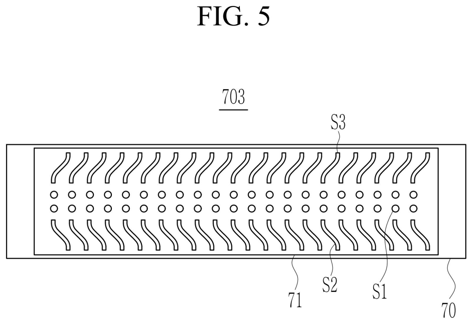

Referring to FIG. 4 and FIG. 5, the first groove S2 and the second groove S3 may include curved lines.

For example, referring to the electrode 702 of FIG. 4, the first groove S2 and the second groove S3 may have curved lines such as, e.g., arc shapes, and the first groove S2 and the second groove S2 may be bent in a direction facing each other.

Referring to the electrode 703 of FIG. 5, the first groove S2 may have a shape in which the arcs bent in different directions are connected and may have a shape broadly similar to the letter "S." The second groove S3 may be formed to be symmetrical, or substantially symmetrical, to the first groove S2 with respect to the imaginary or virtual center line Y. At this time, the first groove S2 and the second groove S3 may be bent more times than in FIG. 5, but since the moving speed of the electrolyte is slow, the impregnation speed of the electrolyte over the entire electrode is slow, which may cause a deterioration in productivity.

Therefore, the bending length and degree may be adjusted depending on the required impregnation speed, impregnation amount, and the like.

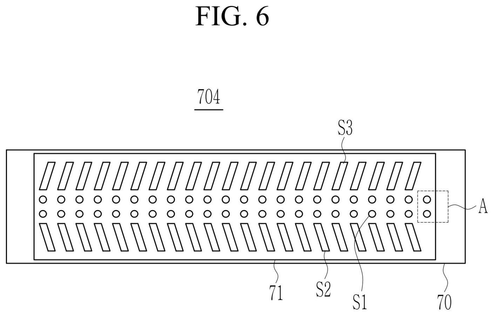

For example, as shown in FIG. 6, when the groove is formed in an inclined or curved shape, an outer region "A" where no groove or hole is formed may occur at both edges of the active material layer.

Therefore, as shown in FIG. 6, an additional hole S1 may be formed in the outer region A, but the type of holes or grooves is not limited thereto, and a groove S2 or S3 may be further formed depending on the size of the outer region A. For example, the groove S2/S3 may be formed in the direction in which the electrolyte moves.

The size of the hole S1 and the groove S2/S3 may be the same as the size of the grooves S2/S3 and the hole S1 shown in FIG. 1 to FIG. 5.

FIG. 7 is a top plan view of an electrode included in a rechargeable battery according to another example embodiment.

As shown in FIG. 7, an electrode 705 according to an example embodiment includes a substrate 70 and an active material layer 71 formed on one surface of the substrate 70. The electrode 705 may be in a sheet form included in a stacked electrode assembly of a rechargeable battery, and may include the electrode coated region DA and the electrode uncoated region DB, and the electrode uncoated region DB may have a form protruding from the electrode coated region to draw current to the outside.

FIG. 7 shows that the grooves S2 and S3 are formed elongated in the direction in which the electrode uncoated region protrudes, but as shown in FIG. 3 to FIG. 6, the grooves S2 and S3 may be formed in various shapes. At this time, the length direction of the groove may be the direction in which the electrolyte is injected in the rechargeable battery.

An impregnation amount and a salt precipitation area were measured according to a comparative example and an embodiment, and are shown in Table 2 below.

In Comparative Examples 3, 4, 5 and Embodiment 4, the active material layer with the same active material was formed, and the negative electrode including graphite was produced. At this time, the active material layer was formed only on one surface of the substrate, the thickness of the active material layer is about 60 µm, and the depth of the hole and the groove is about 30 µm.

Comparative Example 3 did not separately form a hole or a groove, Comparative Example 4 formed only the groove, Comparative Example 5 formed only the hole, and Embodiment 4, as shown in FIG. 1, formed both the hole and the groove.

**Table 2:**

| | Comparative Example 3 | Comparative Example 4 | Comparative Example 5 | Embodiment 4 |
|---|---|---|---|---|
| Groove and hole pattern | No | 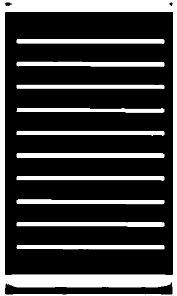 | 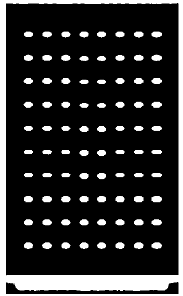 | 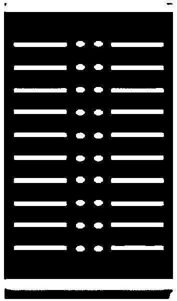 |
| Depth | No | 30 µm | 30 µm | 30 µm |
| Weight change amount (g) | 0.156 | 0.159 | 0.165 | 0.171 |
| Li salt precipitation | 2.3 | 1.7 | 1.5 | 1.3 |
| area (%) | | | | |

### Impregnation amount evaluation:

The amount of the impregnation was evaluated as a weight change, an electrode plate was cut to a width of 95 mm and a length of 150 mm, and the electrode plate was immersed in a container with a water level of 1 cm, and the weight change before and after immersion was measured. At this time, in Comparative Examples 3, 4, 5 and Embodiment 4, the electrode plate was immersed in the electrolyte in the direction in which the electrolyte was injected in the rechargeable battery, that is, in the length direction of the groove, and the electrode plate was immersed in the electrolyte to the depth of about 3 mm, and the change after 1 hour was measured.

Referring to Table 2 above, the change amount of Comparative Example 3, which does not include the groove or hole, is 0.156, and Comparative Examples 4, 5, and Embodiment 4 have larger weight changes compared to Comparative Example 3. This is because the impregnation amount in Comparative Examples 4 and 5 and Embodiment 4 is greater than the impregnation amount in Comparative Example 3.

Additionally, it may be seen that Embodiment 4 shows a larger weight change than Comparative Examples 4 and 5, indicating that Embodiment 4 has the largest impregnation amount.

### Salt precipitation evaluation:

A salt precipitation was evaluated as a precipitation area by taking an image, and the electrode plate was cut to the width of 95 mm and the length of 150 mm, photographed, and analyzed. The captured image was converted into an 8-bit black-and-white image using an image analysis program (e.g., ImageJ, produced by the National Institutes of Health, USA), noise was removed, and a salt deposition area was calculated from the black and white areas.

Referring to Table 2 above, Comparative Examples 3, 4, and 5 have a wider salt precipitation area of 2.3%, 1.7%, and 1.5%, respectively, than Embodiment 4, which has 1.3% of the salt precipitation area. That is, by forming the hole and the groove as in the present disclosure, the salt precipitation area may be reduced, which may improve the performance of the rechargeable battery.

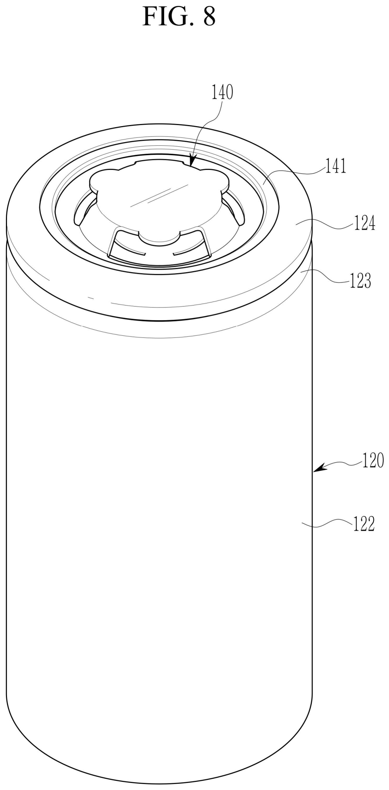

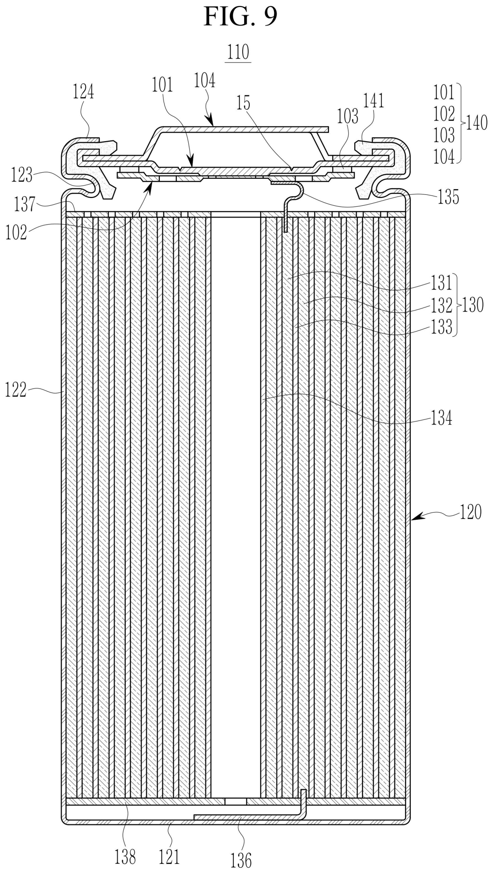

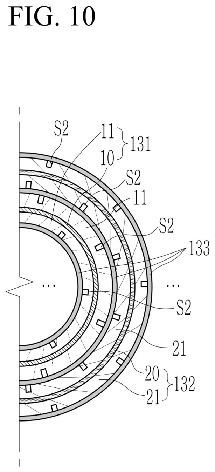

FIG. 8 is a schematic perspective view of a rechargeable battery according to an example embodiment. FIG. 9 is a cross-sectional view of the rechargeable battery illustrated in FIG. 8. FIG. 10 is a cross-sectional view of the rechargeable battery illustrated in FIG. 7.

As shown in FIG. 8 and FIG. 9, a rechargeable battery 110 according to an example embodiment includes a case 120, an electrode assembly 130 accommodated inside the case 120, and a cap assembly 140 assembled to the opening of the case 120 to seal the case 120. The cap assembly 140 includes a safety vent 101, for hindering or preventing explosion of the rechargeable battery 110, and a cap-up 104 for covering the safety vent 101.

The electrode assembly 130 includes a positive electrode 131, a separator 133, and a negative electrode 132 that are stacked, e.g., sequentially stacked. The electrode assembly 130 may be or include a wound cylindrical jelly roll by stacking and winding the positive electrode 131, the separator 133, and the negative electrode 132.

The positive electrode 131 includes a positive substrate, an electrode coated region in which an active material layer is formed on the anode substrate, and an electrode uncoated region in which the substrate is exposed "as is" because the active material layer is not formed. The positive substrate may be formed of or include a thin conductive metal plate and used as a current collector, and may be or include, for example, aluminum. A positive tab 135 may be connected to the electrode uncoated region, and the positive tab 135 may be made of or include the same material as the substrate, for example, aluminum.

The positive active material layer may be formed on one or both surfaces of the positive substrate. The positive active material layer includes a positive active material and may further include a binder and/or a conductive material. The content of the positive active material in the positive active material layer may be in a range of about 90 wt% to about 99.5 wt% with respect to 100 wt% of the positive active material layer, and the contents of the binder and conductive material may be in a range of about 0.5 wt% to about 5 wt%, respectively, with respect to 100 wt% of the positive active material layer.

### Positive active material

As the positive active material, a compound (lithiated intercalation compound) capable of reversibly intercalating and deintercalating lithium ions may be used. For example, at least one of a composite oxide of a metal such as or including at least one of cobalt, manganese, nickel, and a combination thereof and lithium may be used.

The composite oxide may be or include a lithium transition metal composite oxide, and examples thereof include at least one of lithium nickel oxide, lithium cobalt oxide, lithium manganese oxide, lithium phosphoric acid iron compound, cobalt-free nickel-manganese oxide, or a combination thereof.

For example, a compound expressed by any of the chemical formulas below may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li _{(3-f)}Fe₂ PO₄₃ (0≤f≤2); LiₐFePO₄ (0.90≤a≤1.8).

In the above formula, A is or includes at least one of Ni, Co, Mn, or combination thereof; X is or includes at least one of Al, Ni, Co, Mn, Cr, Fe, Mg, Sr, V, a rare-earth element or a combination thereof; D is or includes at least one of O, F, S, P, or a combination thereof; G is or includes at least one of Al, Cr, Mn, Fe, Mg, La, Ce, Sr, V, or a combination thereof; and L1 is or includes at least one of Mn, Al or a combination thereof.

For example, the positive active material may be or include a high-nickel positive active material having a nickel content of 80 mol% or more, 85 mol% or more, 90 mol% or more, 91 mol% or more, or 94 mol% or more and 99 mol% or less, relative to 100 mol% of a metal excluding lithium in a lithium transition metal composite oxide. The high-nickel positive active material may achieve high capacity, and may be applied to high-capacity, high-density lithium rechargeable batteries.

### Binder

The binder is configured to readily adhere the positive active material particles to each other, and readily adhere the positive active material to the current collector. Representative examples of the binders include at least one of polyvinyl alcohol, carboxymethylcellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, styrene-butadiene rubber, (meth)arcrylated styrene-butadiene rubber, epoxy resin, (meth)acryl resin, polyester resin, nylon, and the like, but is not limited thereto.

### Conductive material

The conductive material is configured to provide conductivity to the electrode, and in the configured battery, any material may be used as an electron conductive material as long as the material does not cause an adverse chemical change in the battery. Examples of conductive materials include carbon-based materials such as at least one of natural graphite, artificial graphite, carbon black, acetylene black, Ketjen black, carbon fiber, carbon nanofiber, and carbon nanotube; metal-based materials including at least one of copper, nickel, aluminum, and silver in the form of metal powder or metal fiber; conductive polymers such as polyphenylene derivatives; or mixture thereof.

For example, the positive electrode may have the active material layer having the hole S1 and the grooves S2 and S3, as shown in FIG. 1 and FIG. 2.

Referring to FIG. 10, the positive electrode 131 includes a substrate 10 and an active material layer 11 formed on both surfaces of the substrate, and a hole and a groove may be formed in the active material layer 11, as discussed with respect to FIG. 1 and FIG. 2. For example, the groove S2 may be formed elongated in the direction in which the electrolyte is injected into the case 120.

Referring back to FIG. 8 and FIG. 9, the negative electrode 132 includes a negative electrode substrate, an electrode coated region including an active material layer formed on the negative electrode substrate, and an electrode uncoated region in which the active material layer is not formed and the substrate is exposed. The negative electrode substrate may be formed of or include a thin conductive metal plate and used as a current collector, and may be or include, for example, copper. A negative tab 136 may be connected to the electrode uncoated region.

The negative active material layer may be formed on one surface, or on both surfaces, of the substrate. The content of the negative active material in the negative active material layer may be in a range of about 95 wt% to about 99 wt% with respect to the entire weight of the negative active material layer.

The negative active material may include a binder, and may further selectively include a conductive material. The content of the binder in the negative active material may be in a range of about 1 wt% to about 5 wt% with respect to the entire weight of the negative active material. In addition, when further including the conductive material, the negative active material may constitute a range of about 90 wt% to about 98 wt%, the binder may constitute a range of about 1 wt% to about 5 wt%, and the conductive material may constitute a range of about 1 wt% to about 5 wt% of the negative active material.

### Negative active material

As the negative active material, at least one of a material capable of performing reversible intercalation and deintercalation of lithium ions, a lithium metal, an alloy of the lithium metal, a material doping or dedoping lithium, or a transition metal oxide, may be included.

A material capable of reversibly intercalating/deintercalating lithium ions may include a carbon-based negative active material, for example, crystalline carbon, amorphous carbon or a combination thereof. Examples of crystalline carbon include graphite such as natural graphite or artificial graphite in amorphous, plate-like, flake-like, spherical or fiber shape, and examples of amorphous carbon include at least one of soft carbon or hard carbon, mesophase pitch carbide, calcined coke, and the like.

The alloy of the lithium metal may be or include a metal alloy of lithium and at least one of Na, K, Rb, Cs, Fr, Be, Mg, Ca, Sr, Si, Sb, Pb, In, Zn, Ba, Ra, Ge, Al, and Sn.

As materials capable of being doped and dedoped into lithium, Si-based negative active material or Sn-based negative active material may be included. The Si-based negative active material may be or include at least one of silicon, a silicon-carbon composite, silicon oxide (SiOx, 0≤x≤2), an Si-Q alloy (wherein Q is or includes at least one of an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative active material may be or include at least one of Sn, SnO₂, an Sn-based alloy or a combination thereof.

The silicon-carbon composite may be or include a composite of silicon and amorphous carbon. According to one example embodiment, the silicon-carbon composite may be in the form of a silicon particle, and amorphous carbon coated on the surface of the silicon particle. For example, the silicon-carbon composite may include a secondary particle (a core) in which silicon primary particles are assembled, and an amorphous carbon coating layer (a shell) on the surface of the secondary particle. The amorphous carbon may also be present between the silicon primary particles, so that, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative active material or Sn-based negative active material may be used in combination with the carbon-based negative active material.

### Binder

The binder is configured to adhere the negative active material particles to each other, and to adhere the negative active material to the current collector. The binder may be or include a non-aqueous binder, an aqueous binder, a dry binder or a combination thereof.

The non-aqueous binders include at least one of polyvinylchloride, carboxylated polyvinylchloride, polyvinylfluoride, ethylene propylene copolymer, polystyrene, polyurethane, polytetrafluoroethylene, polyvinylidene fluoride, polyethylene, polypropylene, polyamide imide, polyimide or combinations thereof.

The water-based binder may be or include at least one of styrene-butadiene rubber, (meth)acrylated styrene-butadiene rubber, (meth)acrylonitrile-butadiene rubber, (meth)acryl rubber, butyl rubber, fluorine rubber, polyethylene oxide, polyvinylpyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acryl resin, phenol resin, epoxy resin, polyvinyl alcohol and combinations thereof.

When using the aqueous binder as the negative electrode binder, the aqueous binder may further include a cellulose-based compound that may provide viscosity. This cellulose-based compound may be included by mixing one or more types of carboxymethyl cellulose, hydroxypropyl methyl cellulose, methyl cellulose, or alkali metal salts thereof. The alkali metal may be or include at least one of Na, K, or Li.

The dry binder is a polymer material capable of being fiberized, and may be or include, for example, at least one of polytetrafluoroethylene, polyvinylidene fluoride, polyvinylidene fluoride-hexafluoropropylene copolymer, polyethylene oxide or a combination thereof.

### Conductive material

The conductive material is configured to provide conductivity to the electrode, and may be any electron conductive material that does not cause an adverse chemical change in the battery configuration. Examples thereof may include carbon-based materials such as at least one of natural graphite, artificial graphite, carbon black, acetylene black, Ketjen black, carbon fiber, carbon nanofiber, and carbon nanotube; metal-based materials in the form of metal powder or metal fiber, including at least one of copper, nickel, aluminum, and silver; conductive polymers such as polyphenylene derivatives; or mixtures thereof.

For example, the negative electrode may have an active material layer having the hole S1 and the grooves S2 and S3, as discussed with respect to FIG. 1 and FIG. 2.

Referring back to FIG. 10, the negative electrode 132 includes a substrate 20 and an active material layer 21 formed on both surfaces of the substrate, and the hole and the groove S2 may be formed in the active material layer 21, as described in FIG. 1 and FIG. 2. For example, the groove S2 may be formed elongated in the direction in which the electrolyte is injected into the case 120.

Referring back to FIG. 8 and FIG. 9, the separator 133 may be placed between the positive electrode 131 and the negative electrode 132, and may provide insulation therebetween, and the separator 133 may be or include at least one of polyethylene, polypropylene, polyvinylidene fluoride or a multilayer of two or more layers thereof, and mixed multilayers such as a polyethylene/polypropylene two-layer separator, a polyethylene/polypropylene/polyethylene three-layer separator, a polypropylene/polyethylene/polypropylene three-layer separator, and the like, may be included.

Since the electrode assembly 130 may be wound around a center pin 134, the center pin 134 may be positioned at the center of the electrode assembly 130, and may be parallel, or substantially parallel, to the direction in which the electrode assembly 130 is inserted into the case 120.

The center pin 134 may be in a form of a hollow circular pipe to minimize or reduce deformation, or maintain a shape close to the shape before the deformation, when being subjected to an all-surface compressive load or a local impact load applied from the outside of the rechargeable battery. Additionally, the center pin 134 may act as a passage for a gas generated from the inside. The center pin 134 may be omitted when desired.

The center pin 134 may be formed of or include a material having a given rigidity, such as, e.g., steel, a steel alloy, aluminum, an aluminum alloy, or a metal having conductivity, in order to minimize or reduce deformation by an external impact. Accordingly, since the center pin 134 has conductivity, in order to maintain two ends of the center pin 134 in an insulated state, a first insulating plate 137 may be arranged between the cap assembly 140 and the upper end of the center pin 134, and a second insulating plate 138 may be arranged between the bottom portion 121 of the case 120 and the lower end of the center pin 134.

The first insulating plate 137 may be formed with a through hole passing through the interior of the center pin 134, a through hole passing through the positive tab 135, and a plurality of through holes through which the electrolyte flows. The second insulating plate 138 may have a through hole communicating with the inside of the center pin 134 and a through hole through which the negative tab 136 passes.

The case 120 has one side open so that the electrode assembly 130 may be inserted together with the electrolyte, and may have approximately the same shape as the electrode assembly 130. The case 120 may include a circular bottom portion and a cylindrical side portion extending a given length in the upper direction from the bottom portion.

During the assembly process of the rechargeable battery, the upper portion of the cylindrical case may be open. Therefore, during the assembly process of the rechargeable battery, the electrode assembly may be inserted into the cylindrical case, and then the electrolyte may be injected into the cylindrical case. The case 120 may be composed of or include at least one of steel, a steel alloy, aluminum, and an aluminum alloy.

The electrolyte is configured to allow lithium ions, which are produced by an electrochemical reaction at the positive and negative electrodes inside the battery, to move therethrough. The electrolyte may be composed of or include a lithium salt such as LiPF₆, and LiBF₄ in an organic solvent such as EC, PC, DEC, EMC, and EMC. The electrolytes may be liquid, solid or in a gel form.

In an example embodiment, the grooves S2 and S3 are formed elongated in the direction in which the electrolyte is injected (or the direction in which the electrode assembly is inserted), so that the electrolyte may move quickly or readily along the grooves S2 and S3 to increase the impregnation speed of the electrode.

Additionally, the electrolyte that moves quickly or readily through the groove stays in the hole that is positioned relatively centrally, thereby increasing the amount of the electrolyte impregnation of the electrode.

A beading portion 123 and a crimping portion 124 may be positioned on the side portion 122 of the case 120.

The beading portion 123 is a portion that is deformed to be concave toward the inside of the case 120, and the crimping portion 124 is a portion that is deformed so that the edge of the side portion 122 is bent toward the inside of the battery 110. The motion of the electrode assembly 130 may be reduced or suppressed by the beading portion 123, and the cap assembly 140 may be attached to the case 120 by the crimping portion 124.

The cap assembly 140 includes a safety vent 101 to hinder or prevent an explosion of the rechargeable battery 110, and the cap-up 104 covering the safety vent 101.

The cap assembly 140 may include a safety vent 101 having a notch groove 15, a cap-down 102 positioned on one side (the lower side) of the safety vent 101 facing the electrode assembly 130, a ring-shaped insulating portion 103 positioned between the safety vent 101 and the cap-down 102, and the cap-up 104 positioned on one side (the upper side) of the safety vent 101 opposite the cap-down 102. The safety vent 101 may be referred to as a current interruptive device (CID).

The central portion of the safety vent 101 may be thicker than the peripheral portion surrounding the central portion thereof, and the notch groove 15 may be positioned in the peripheral portion of the safety vent 101.

The thickness of the central portion of the cap-down 102 may be less than the thickness of the peripheral portion surrounding the central portion thereof, and at least one opening may be formed in the central portion and the peripheral portion of the cap-down 102.

The central portion of the safety vent 101 and the central portion of the cap-down 102 may be joined as one piece by a method such as, e.g., welding, and the safety vent 101 and the cap-down 102 may be spaced apart from each other in the remaining portions except for the central portion thereof.

The insulating portion 103 may surround the central portion of the safety vent 101 and the cap-down 102, and may be arranged between the safety vent 101 and the cap-down 102. The insulating portion 103 may be joined, e.g., integrally joined, to the safety vent 101 and the cap-down 102 by a method such as, e.g., fusion.

Meanwhile, the positive tab 135 of the electrode assembly 130 may be fixed to one side (or the lower side) of the cap-down 102, and the cap-down 102, the safety vent 101, and the cap-up 104 may be charged positively. The positive tab 135 may be folded so that one surface of the cap-down 102 faces the positive tab 135 to increase the contact area with the cap-down 102.

The cap-up 104 may protrude outward to constitute a positive terminal that is in contact with an external device and that allows current to flow to the outside, and may have a flat surface.

The negative tab 136 may be connected to the electrode uncoated region of the negative electrode so as to protrude in the direction opposite to the positive tab 135, and may be attached to the lower bottom surface of the case 120 by, e.g., welding. Therefore, the case 120 may be charged as a negative electrode, and the bottom portion 121 of the case 120 may constitute a negative terminal.

The above cap assembly 140 may be joined to the side portion 122 of the case 120 via an insulating gasket 141. The insulating gasket 141 may surround the edges of the safety vent 101 and the cap-up 104, and may be crimped between the beading portion 123 and the crimping portion 124 of the case 120.

During the use process of the rechargeable battery 110, a gas may be generated inside the case 120 for various reasons, and the internal pressure of the rechargeable battery 110 may increase due to the gas.

When gas is generated, pressure is substantially continuously applied to the safety vent 101 through the opening of the cap-down 102, and at a certain pressure, the safety vent 101 is deformed toward the outside (or the upper side) of the cap assembly 140, so that the safety vent 101 and the cap-down 102 are separated from each other. At this time, the central portion of the cap-down 102 breaks away from the peripheral portion and rises with the safety vent 101 while remaining attached to the central portion of the safety vent 101.

The current flow is blocked by the separation of the safety vent 101 and the cap-down 102, and when the pressure continues to increase, the safety vent 101 is ruptured around the notch groove 15, releasing the internal gas. The internal gas is discharged to the outside of the rechargeable battery 110 through an exhaust port formed in the cap-up 104.

### Description of symbols:

140: cap assembly
70: substrate
71: active material layer
110: rechargeable battery
120: case
130: electrode assembly
131: positive electrode
132: negative electrode
133: separator
135: positive tab
136: negative tab
140: cap assembly
700, 701, 702, 703, 704, 705: electrode

## Claims

1. An electrode (700) for a rechargeable battery (110), the electrode (700) comprising:
a substrate (70);
an active material layer (71) formed on the substrate (70);
a hole (S1) formed in the active material layer (71); and
a first groove (S2) and a second groove (S3) formed on both sides of the hole (S1) and spaced apart from the hole (S1).

2. The electrode (700) for the rechargeable battery (110) of claim 1, wherein a sum of the length of the first groove (S2) and a length of the second groove (S3) is in a range of about 10% to about 80% of a length of the active material layer (71) in a first direction.

3. The electrode (700) for the rechargeable battery (110) of claim 1 or 2, wherein an interval between the first groove (S2) and the second groove (S3) is in a range of about 10% to about 80% of a length of the active material layer (71) in a first direction.

4. The electrode (700) for the rechargeable battery (110) of any one of the preceding claims, wherein the electrode (700) comprises a plurality of holes (S1) have an opening facing the surface of the active material layer (71), and the plurality of holes (S1) are arranged at regular intervals.

5. The electrode (700) for the rechargeable battery (110) of claim 4, wherein the hole (S1) has a shape that narrows in width with increasing distance from the surface of the active material layer (71).

6. The electrode (700) for the rechargeable battery (110) of any one of the preceding claims, wherein a depth of the first groove (S2) and the second groove (S3) is substantially constant.

7. The electrode (700) for the rechargeable battery (110) of claim 6, wherein a depth of the first groove (S2) and of the second groove (S3) is shallower than a depth of the hole (S1).

8. The electrode (700) for the rechargeable battery (110) of any one of the preceding claims, wherein a center of the hole (S1) and the horizontal line that bisects a width of the groove (15) are positioned on a same straight line.

9. The electrode (700) for the rechargeable battery (110) of any one of the preceding claims, wherein:
the first groove (S2) and the second groove (S3) are inclined at an angle in a range of about -50 degrees to about 50 degrees with respect to a virtual center line passing between the first groove (S2) and the second groove (S3) and bisecting a length of the active material layer (71) in a first direction.

10. The electrode (700) for the rechargeable battery (110) of any one of the preceding claims, wherein:
the hole (S1), the first groove (S2) and the second groove (S3) are substantially symmetrical with respect to a virtual center line passing between the first groove (S2) and the second groove (S3) and bisecting a length of a first direction of the active material layer (71).

11. The electrode (700) for the rechargeable battery (110) of any one of the preceding claims, wherein the first groove (S2) and the second groove (S3) comprise a curved line.

12. The electrode (700) for the rechargeable battery (110) of any one of the preceding claims, wherein:
the width of the first groove (S2) and of the second groove (S3) is in a range of about 10µm to about 100µm, and
an interval between adjacent first grooves (S2) and an interval between adjacent second grooves (S3) are in a range of about 70µm to about 300µm.

13. The electrode (700) for the rechargeable battery (110) of any one of the preceding claims, wherein the diameter of the hole (S1) is in a range of about 10 µm to about 100 µm.

14. A rechargeable battery (110) comprising:
an electrode assembly (130) including a positive electrode (131), a negative electrode (132) overlapping the positive electrode (131), and a separator (133) between the positive electrode (131) and the negative electrode (132);
a case (120) accommodating the electrode assembly (130);
an electrolyte injected into the case (120); and
a cap assembly (140) sealing the case (120);
wherein at least one of the positive electrode (131) and the negative electrode (132) includes an active material layer (71) having a substrate (70), a first groove (S2) and a second groove (S3) formed on the substrate (70) and spaced apart from each other in a direction in which the electrolyte is injected, and a hole (S1) positioned between the first groove (S2) and the second groove (S3).

15. The rechargeable battery (110) of claim 14, wherein a plurality of holes (S1) are placed at regular intervals on the active material layer (71).
